(19) **Europäisches Patentamt / European Patent Office / Office européen des brevets**

(11) **EP 3 171 661 A1**

(12) **EUROPEAN PATENT APPLICATION**
published in accordance with Art. 153(4) EPC

(43) Date of publication:
24.05.2017 Bulletin 2017/21

(21) Application number: 14897856.2

(22) Date of filing: 26.09.2014

(51) Int Cl.:
*H04W 84/18* (2009.01)

(86) International application number:
PCT/CN2014/087571

(87) International publication number:
WO 2016/008218 (21.01.2016 Gazette 2016/03)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 14.07.2014 CN 201410333995

(71) Applicant: ZTE Corporation
Shenzhen, Guangdong 518057 (CN)

(72) Inventor: ZHANG, Yu
Shenzhen
Guangdong 518057 (CN)

(74) Representative: Awapatent AB
Junkersgatan 1
582 35 Linköping (SE)

(54) **WIRELESS AD HOC NETWORK, CENTER NODE, DYNAMIC SELECTION METHOD AND STORAGE MEDIUM**

(57) The present invention discloses a wireless Self-Organized Network (SON), a center node dynamic selection method and a center node, which are designed to be applicable to an increasingly complicated network coverage condition. A structure of the wireless SON structurally includes a center node and ordinary nodes; the center node and the ordinary nodes are non-peer nodes; and the center node is arranged to manage at least part of communication of the ordinary nodes. The present invention further discloses a computer storage medium.

FIG. 1

**Description**

Technical Field

The present invention relates to a center node selection technology in the field of communication, and more particularly to a wireless Self-Organized Network (SON), a center node, a dynamic selection method and a storage medium.

Background

A wireless Mobile Ad Hoc Network (MANET) or SON is different from a conventional wireless communication network. The wireless SON does not require support of any piece of fixed equipment, each node, such as a user terminal, may be autonomously networked, and another user node forwards data during communication. Such a network form breaks geographical limits of an existing mobile communication network, can implement deployment more rapidly, conveniently and efficiently, and is suitable for communication requirements of some emergency scenarios, such as an individual soldier communication system in a battlefield. However, the wireless SON also has the shortcomings of limited network bandwidth, poor support to a real-time service and low security. At present, lots of domestic and abroad researchers are making researches on that project.

A wireless SON is a multi-hop mobile peer network which consists of dozens to hundreds of peer nodes, adopts a wireless communication mode, dynamical networking. However, along with development of a communication technology, network coverage becomes increasingly complicated, and a wireless SON completely formed by peer nodes is obviously unfavorable for communication management and control.

Summary

In view of this, an embodiment of the present invention provides a wireless SON on one aspect, intended to be adapted to a requirement of an increasingly complicated network deployment environment; and the embodiment of the present invention also provides a center node dynamic selection method and a center node on the other aspect, intended to dynamically adjust the center node to maintain stable management over an ordinary node.

In order to achieve the abovementioned purpose, technical solutions of embodiments of the present invention are implemented as follows.

A first aspect of an embodiment of the present invention provides a wireless Self-Organized Network SON, a structure of the wireless SON structurally including a center node and ordinary nodes, herein

the center node and the ordinary nodes are non-peer nodes; and the center node is arranged to manage at least part of communication of the ordinary nodes.

In an exemplary embodiment,
the center node is arranged to determine a next center node according to energy values of various ordinary nodes and an energy value of the center node, herein the energy values of the ordinary nodes are determined according to at least one or more of transmission power, switching frequencies, bandwidths, mobile frequencies and electric quantity of the ordinary nodes; and
the energy value of the center node is determined according to at least one or more of a transmission power, a switching frequency, a bandwidth, a mobile frequency and electric quantity of the center node.

In an exemplary embodiment,
the center node is further arranged to send a node replacement notification to the next center node; and
the node replacement notification is arranged to trigger the next center node to be switched into a center node.

In an exemplary embodiment,
the center node is further arranged to send broadcast information to the ordinary nodes.

A second aspect of the embodiment of a present invention provides a center node dynamic selection method, the method including:

acquiring an energy value of a current center node and energy values of various ordinary nodes ; and
determining a first node that meets a preset condition as a next center node according to the energy value of the current center node and the energy values of the various ordinary nodes, the first node being an ordinary node or the current center node,
herein the energy values of the ordinary nodes are determined according to at least one or more of transmission powers, bandwidths, switching frequencies, mobile frequencies and electric quantity of the ordinary nodes; and
the energy value of the current center node is determined according to at least one or more of a transmission power, a switching frequency, a bandwidth, a mobile frequency and electric quantity of the current center node.

In an exemplary embodiment,
when the first node is an ordinary node, the method further includes:

notifying the first node to be switched to a center node state; and
the current center node quitting the center node state.

In an exemplary embodiment,
the step that determining the first node that meets the preset condition as the next center node according to the energy value of the current center node and the energy values of the various ordinary nodes includes:
determining whether there is an energy value of at least one ordinary node is higher than the energy value of the current center node ;

when there is the energy value of the at least one ordinary node is higher than the energy value of the current center node is determined, determining whether there is an energy value of the at least one ordinary node with a duration when the energy value of the at least one ordinary node is higher than the energy value of the current center node exceeds a specified time length; and

when there is the energy value of the at least one ordinary node is higher than the energy value of the current center node and the duration exceeds the specified time length, determining one ordinary node in the at least one ordinary node as the first node, otherwise determining the current center node as the first node.

In an exemplary embodiment, the step that acquiring the energy value of the current center node and the energy values of various ordinary nodes includes:

the current center node regularly or periodically detecting the energy value of the current center node and the energy values of the various ordinary nodes; or

regularly or periodically detecting the energy value of the current center node , and receives the energy values regularly or periodically reported by the various ordinary nodes.

In an exemplary embodiment, the step that acquiring the energy value of the current center node and the energy values of various ordinary nodes further includes:

receiving an energy value, actively reported by a newly added ordinary node, of the newly added ordinary node.

A third aspect of an embodiment of the present invention provides a center node, the center node including:

an acquisition unit, arranged to acquire an energy value of a current center node and energy values of various ordinary nodes; and

a determination unit, arranged to determine a first node that meets a preset condition as a next center node according to the energy value of the current center node and the energy values of the various ordinary nodes, the first node being an ordinary node or the current center node,

herein the energy values of the ordinary nodes are determined according to at least one or more of transmission powers, bandwidths, switching frequencies, mobile frequencies and electric quantity of the ordinary nodes; and

the energy value of the current center node is determined according to at least one or more of a transmission power, a switching frequency, a bandwidth, a mobile frequency and electric quantity of the current center node.

In an exemplary embodiment, the center node further includes:

a notification unit, arranged to, when the first node is an ordinary node, notify the first node to be switched to a center node state; and

a quitting unit, arranged to make the current center node quit the center node state.

In an exemplary embodiment,

the determination unit includes:

a first determination module, arranged to determine whether there is an energy value of at least one ordinary node is higher than the energy value of the current center node;

a second determination module, arranged to, when there is the energy value of the at least one ordinary node is higher than the energy value of the current center node, determine whether there is an energy value of the at least one ordinary node with a duration when the energy value of the at least one ordinary node is higher than the energy value of the current center node exceeds a specified time length; and

a third determination module, arranged to, when there is the energy value of the at least one ordinary node is higher than the energy value of the current center node and the duration exceeds the specified time length, determine one ordinary node in the at least one ordinary node as the first node, otherwise determine the current center node as the first node.

In an exemplary embodiment, the acquisition unit is arranged to regularly or periodically detect, by the current center node, the energy value of the current center node and the energy values of the various ordinary nodes; or regularly or periodically detect the energy value of the current center node and receive the energy values regularly or periodically reported by the various ordinary nodes.

In an exemplary embodiment, the acquisition unit is further arranged to receive an energy value, actively reported by a newly added ordinary node, of the newly added ordinary node.

A fourth aspect of the embodiment of the present invention further provides a computer storage medium, a computer-executable instruction is stored in the computer storage medium, and the computer-executable instruction is arranged to execute at least one of the method in the first aspect of the embodiment of the present invention.

According to the wireless SON, center node dynamic selection method, communication node and computer storage medium in the embodiment of the present invention, the center node which manages communication of the ordinary nodes is added in the network, the condition that all nodes in an existing wireless SON are all at peer positions and may not be adapted to increasingly complicated network coverage formed by cross and overlapped arrangement of an existing multiple network is changed, and the center node is arranged to better control and manage communication in the wireless SON; and meanwhile, by proposing the center node dynamic selection method, a proper center node may be dynamically selected according to current energy values of each node in the wireless SON, and stability of the center node may be maintained.

Brief Description of Drawings

FIG.1 is a structure diagram of a wireless SON according to an embodiment of the present invention;

FIG. 2 is a structure diagram of another wireless SON according to an embodiment of the present invention;

FIG. 3a is a first flowchart of a center node dynamic selection method according to an embodiment of the present invention;

FIG. 3b is a second flowchart of a center node dynamic selection method according to an embodiment of the present invention;

FIG. 4 is a flowchart of determination of a next center node according to an embodiment of the present invention;

FIG. 5 is a schematic diagram of network changing based on a center node dynamic selection method according to an embodiment of the present invention;

FIG. 6a is one of structure diagrams of a center node according to an embodiment of the present invention;

FIG. 6b is one of structure diagrams of a center node according to an embodiment of the present invention;

FIG. 7 is a structure diagram of a determination unit according to an embodiment of the present invention; and

FIG. 8 is a flowchart of a center node dynamic selection method according to an example of the present invention.

Detailed Description

Exemplary embodiments of the present invention will be described below with reference to the drawings in detail. It should be understood that the exemplary embodiments described below are only adopted to describe and explain the present invention and not intended to limit the present invention.

Embodiment 1

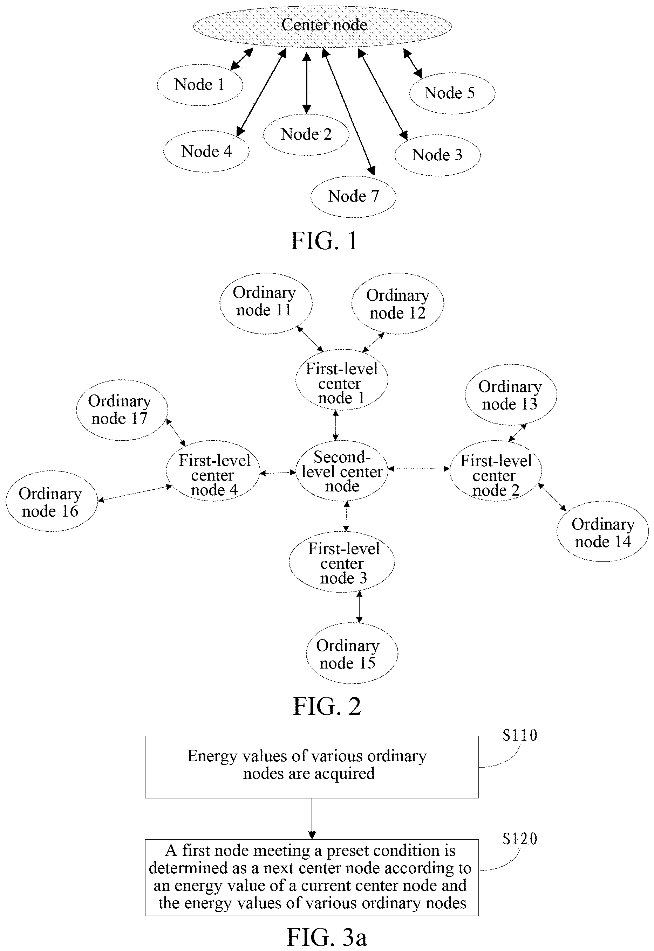

As shown in FIG. 1, an embodiment provides a wireless SON, and a structure of the wireless SON includes a center node and ordinary nodes; the ordinary nodes include a node 1, a node 2, a node 3, a node 4, a node 5 and a node 7;

the center node and the ordinary nodes are non-peer nodes; and the center node is arranged to manage at least part of communication of the ordinary nodes.

That the center node is arranged to manage at least part of communication of the ordinary nodes includes that: the center node is arranged to manage all communication of the ordinary nodes and the center node is arranged to manage at least part of communication of the ordinary nodes.

In the technical solution where the center node is only arranged to manage at least part of communication of the ordinary nodes, the center node is specifically arranged to manage at least part of communication in the communication among the ordinary nodes according to a management strategy. Specifically, for example, a physical distance between a first ordinary node and second ordinary node in the wireless SON is relatively short; and communication between the first ordinary node and the second ordinary node may be conveniently implemented only by forwarding of p other nodes, p is smaller than a forwarding node threshold value, the communication between the first ordinary node and the second ordinary node slightly influences network coverage of the wireless SON, and is the communication which is specified not to be required to be managed by the center node according to the management strategy, and the center node may not manage communication between the first ordinary node and the second ordinary node.

Management of the center node over communication of the ordinary nodes may specifically be management control such as route management and/or mobility management of the center node over the ordinary nodes. The center node may be arranged to select a proper route for communication among the ordinary nodes according to a factor such as a network coverage condition of an area where it is located and energy values of various ordinary nodes, work to register or deregister an ordinary node which is added in its management or moves out of its management area, send communication control information to the ordinary nodes and the like. Specifically, the center node sends the communication control information to the ordinary nodes to control communication of the ordinary nodes.

Adding the center node which manages communication in the wireless SON may manage and/or control communication of the ordinary nodes, and may achieve adaptability to an increasingly complicated network coverage condition, particularly in a network covered by multiple communication systems in 5th-Generation (5G) in the future.

The center node is arranged to determine a next center node according to energy values of the ordinary nodes and an energy value of the center node,
herein the energy values of the ordinary nodes are determined according to at least one or more of transmission powers, switching frequencies, bandwidths, mobile frequencies and electric quantity of the ordinary nodes; and
the energy value of the center node is determined according to at least one or more of a transmission power, a switching frequency, a bandwidth, a mobile frequency and electric quantity of the center node.

The center node at a current moment may be called a current center node; an energy value of the current center node is the energy value of the center node; and the energy value of the center node and the energy values of various ordinary nodes may all be regularly or periodically detected by the current center node. Regular detection is detection at a specified time point; and periodic detection is detection performed every fixed time length.

The current center node may also only regularly or periodically detect its own energy value and receive the energy values regularly or periodically reported by various ordinary nodes.

The transmission power is preferably stable transmission power provided by the ordinary nodes or the center node, specifically such as average transmission power. The transmission power which may be provided by the center node is usually required to be higher than a certain power threshold value, otherwise not all ordinary nodes in its management area may be covered.

The switching frequency refers to a switching frequency of the ordinary node or the center node between on and off states. A node of which a switching frequency is excessively high is unsuitable to serve as a center node; otherwise the ordinary nodes are in a state that there is usually no center node for management.

The mobile frequency refers to a frequency for which the ordinary node or the center node enters and leaves a specified area, and the specified area may be an area currently managed by the center node.

The electric quantity may be an electric charge quantity which may enable a node to normally work. Usually, when mobile electronic equipment serves as the center node or ordinary node in the embodiment, the mobile electronic equipment is usually powered by a battery if not being directly connected to a power supply network through a socket, and the electric quantity is equal to electric quantity of the battery in the mobile electronic equipment. If a piece of electronic equipment is connected to a commercial power network, it may be considered that electric quantity of a node corresponding to the mobile electronic equipment is sufficient.

The bandwidth of the center node is required to be larger than a certain bandwidth threshold value, so that there is a sufficient bandwidth for sending management and/or control information to the ordinary nodes to better serve communication of various ordinary nodes.

In a specific implementation process, the energy value E of either an ordinary node or the center node may be calculated by adopting the following formula:

$$E = W1*P - W2*F1 + W3*B - W4*F2 + W5*Q,$$

where W1 is a weight of the transmission power P, and a value range is preferably a positive number more than 0;

W2 is a weight of the switching frequency F1, and a value range is preferably a positive number more than 0;

W3 is a weight of the bandwidth B, and a value range is preferably a positive number more than 0;

W4 is a weight of the mobile frequency F2, and a value range is preferably a positive number more than 0; and

W5 is a weight of the electric quantity Q, and a value range is preferably a positive number more than 0.

In the specific implementation process, magnitudes of corresponding weights may be regulated according to a degree of influence of each factor on a node serving as the center node. Specifically, for example, if it is considered that influence of the mobile frequency F2 on the node serving as the center node is greater than the transmission power P, a value of W4 may be higher than a value of W1.

In the specific implementation process, a calculation method for the energy value of the center node is the same as a calculation method for the energy value of the ordinary node.

Herein, the center node is further arranged to send a node replacement notification to the determined next center node to trigger the next center node to be switched into a center node. For specifically how to switch into the center node, an ordinary node state may be switched into a center node state. A node in the ordinary node state is usually an ordinary node, and a node in the center node state is a center node.

Furthermore, the center node is further arranged to send broadcast information to the ordinary nodes.

The broadcast information is information which should be known by all the ordinary nodes, specifically such as center node replacement information of node management information or ordinary node addition or deletion information.

The center node may send the broadcast information to various ordinary nodes one by one through a dedicated signaling, and may also send the broadcast information to all the ordinary nodes in a multicast or broadcast mode.

In the specific implementation process, the center node may also be a node connected with another communication system network in an area where it is located, and the center node may implement communication of nodes in different communication system networks as an intermediate node of the different communication system networks. Specifically, for example, the center node may establish a connection and perform information interaction with a macro evolved Node B, and the center node may acquire network coverage information from the macro evolved Node B to control and/or manage communication among the ordinary nodes of the wireless SON. Specifically, for example, the center node acquires clock information of the macro evolved Node B, and corrects clock information of the ordinary nodes according to the clock information to keep synchronous clocks among the ordinary nodes to avoid the problem of poor communication quality caused by a synchronization abnormality. The center node may be further arranged to coordinate a conflict such as interference between the wireless SON and the other communication system network through information interaction.

The wireless SON of the embodiment is divided by area. Usually, only one center node is arranged at a level in an area. Specifically, as shown in FIG. 2, a first-level center node 1, a first-level center node 2, a first-level center node 3, a first-level center node 4 and a second-level center node are included. Each first-level center node is an ordinary node for the second-level center node, but these first-level center nodes are center nodes to which ordinary nodes are directly subordinate for these ordinary nodes managed by them. For example, the first-level center node 1 is a center node of an ordinary node 11 and an ordinary node 12; the first-level center node 2 is a center node of an ordinary node 13 and an ordinary node 14; the first-level center node 3 is a center node of an ordinary node 15; and the first-level center node 4 is a center node of an ordinary node 16 and an ordinary node 17.

Ordinary nodes managed by different center nodes at the same level may usually not directly communicate because of a relatively long geographical area distance, and at this moment, at least two center nodes may serve as forwarding nodes for communication. Specifically, for example, the ordinary node 11 and the ordinary node 15 are managed by different first-level center nodes; and at this moment, the ordinary node 11 and the ordinary node 15 may communicate by taking the first-level center node 1 and the first-level center node 3 as intermediate nodes. At this moment, communication between the first-level center node 1 and the first-level center node 3 is controlled by the second-level center node. Specifically, for example, the current second-level center node finds that the first-level center node 1 has been overloaded when managing the ordinary nodes, information received by the first-level center node 3 from the ordinary node 15 is forwarded to the ordinary node 11 by the first-level center node at this moment, and the second-level center node may send control signaling to delay forwarding of the first-level center node 3 at this moment to avoid further increase of a load of the first-level center node.

The nodes in the wireless SON include communication nodes such as a mobile phone, a tablet computer, a notebook computer or a home evolved Node B, and in the specific implementation process, the node such as the home evolved Node B with a relatively low relative mobile frequency is preferably selected as the center node.

From the above, the embodiment provides a completely new wireless SON, and the center node is added in an existing network completely formed by peer nodes; and the center node is arranged to manage communication of the ordinary nodes to deal with increasingly complicated network coverage to ensure high communication quality.

Embodiment 2

As shown in FIG. 3a, an embodiment provides a center node dynamic selection method, the method including steps S110 and S120.

In step S110: an energy value of a current center node and energy values of various ordinary nodes are acquired.

In step S120: a first node that meets a preset condition is determined as a next center node according to the energy value of the current center node and the energy values of the various ordinary nodes, the first node is an ordinary node or the current center node.

Herein the energy values of the ordinary nodes are determined according to at least one or more of transmission powers, bandwidths, switching frequencies, mobile frequencies and power of the ordinary nodes; and

the energy value of the current center node is determined according to at least one or more of transmission power, switching frequency, bandwidth, mobile frequency and electric quantity of the current center node.

The method of the embodiment is a method which may be applied to the wireless SON in embodiment 1, and device which executes Step S110 to Step S120 is preferably the current center node.

The current center node is a node which serves as a center node at a current moment, and is relative to ordinary nodes at the current moment; the center node is arranged to manage part of communication of the ordinary nodes; and distinction and attributes of the center node and ordinary nodes of the embodiment may refer to the center node and ordinary nodes in embodiment 1. A calculation mode for the energy value of the center node and the energy values of the ordinary nodes may also refer to the corresponding part in embodiment 1.

The next center node is dynamically determined by virtue of the energy values, so that simplicity and rapidness are ensured, and the center node may have a relatively high energy value all the time.

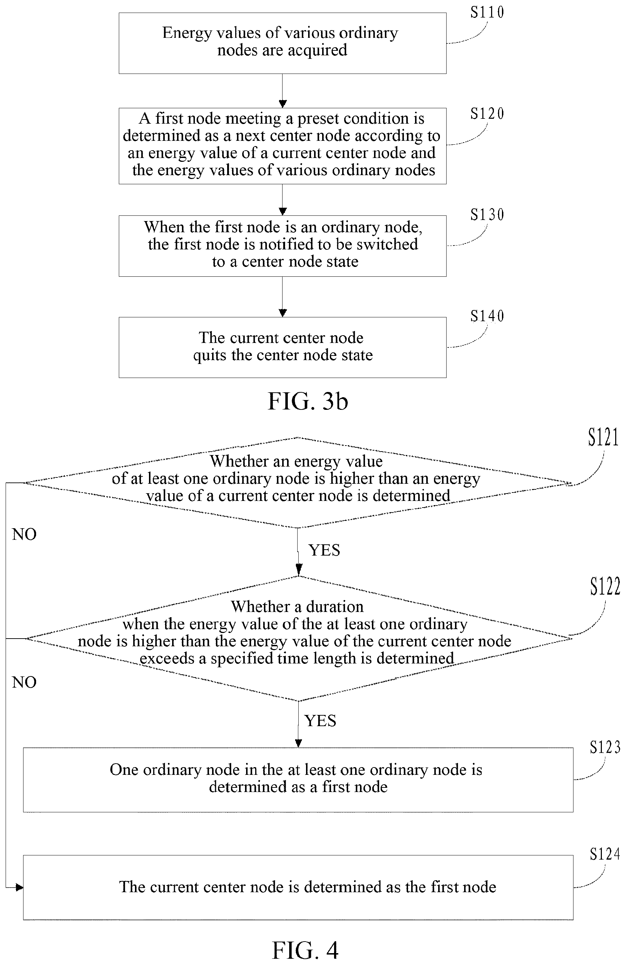

Furthermore, as shown in FIG. 3b, the method further includes step 130 and step 140.

In step S130: when the first node is an ordinary node, the first node is notified to be switched to a center node state.

In step S140: the current center node quits the center node state.

When the first node is the current center node, the current center node is maintained in the center node state, and various ordinary nodes are maintained in an ordinary node state.

Specifically, Step S110 at least includes the following two modes.

First mode: the current center node detects the energy values of all the nodes, and all the nodes include the current center node and the various ordinary nodes.

Second mode: the current center node only detects its own energy value and receives the energy values which are sent to the current center node after the ordinary nodes autonomously detect and calculate the energy values, herein sending of the energy values of the ordinary nodes to the current center node may be autonomous sending, and may also be sending based on an indication of the center node.

The second mode is preferred in the embodiment, so that a workload of the current center node may be reduced, power consumption of the current center node may be reduced, and the problem of frequent center node replacement caused by power reduction of each ordinary node detected by the center node may further be reduced.

Furthermore, the step that the energy values of various ordinary nodes are acquired further include that:

an energy value, actively reported by a newly added ordinary node, of the newly added ordinary node is received.

When an ordinary node is added into a management area of a center node, in order to facilitate management of the current center node, the newly added ordinary node actively reports its energy value.

During a specific implementation process, the center node may further control communication among the ordinary nodes according to the energy values of the ordinary nodes. Specifically, as shown in FIG. 1, if a node 5 is required to communicate with a node 1, forwarding may be implemented through a node 2, and forwarding may also be implemented through a node 3. If the center node finds that an energy value of the node 2 is very low at this moment, the energy value of the node 2 may further be decreased to make it impossible to normally support own communication of the node 2 if the node 2 still serves as an intermediate forwarding node of the node 5 and the node 1. In order to ensure normal communication of the node 2, the center node may preferably select the node 3 as the forwarding node of the node 5 and the node 1 at this moment according to energy values of the two ordinary nodes.

Step S110 may specifically be as follows.

The step that the energy value of the current center node and the energy values of each ordinary node are acquired includes that:

the current center node regularly or periodically detects the energy value of the current center node and the energy values of the various ordinary nodes; or

the energy value of the current center node is regularly or periodically detected, and the energy values regularly or periodically reported by each ordinary node are received.

Regular detection is detection at specified time; and periodic detection is detection or reception performed every fixed time. Regular detection is implemented at specified time points, and a time interval between any two specified time points may be equal, and may also be unequal. The time interval between two specified time points may specifically be determined according to a communication frequency. Specifically, for example, the time interval between the two specified times may be increased at night, and in daylight, a communication frequency between nodes is usually higher than the frequency of the communication nodes at night, and the time interval between the two specified times may be properly shortened.

By regular or periodic detection or periodic reporting of various ordinary nodes, the current energy values of various nodes of the wireless SON may be timely obtained to select a more suitable center node and avoid the problem of communication interruption caused when the current center node is not suitable for serving as the center node any longer.

A length of a period and a starting time of a first period are determined in advance, and may specifically be determined according to a current communication frequency of the network and an updating rate of the energy values of each node.

Furthermore, as shown in FIG. 4, Step S120 may include steps S121-S124.

In step S121: whether there is an energy value of at least one ordinary node is higher than the energy value of the current center node is determined, if YES, step S122 is executed, and if NO, step S124 is executed;

In step S122: whether there is an energy value of the at least one ordinary node with a duration when the energy value of the at least one ordinary node is higher than the energy value of the current center node exceeds a specified time length is determined, if YES, step S123 is executed, and if NO, step S124 is executed;

In step S123: one ordinary node in the at least one ordinary node is determined as the first node.

In step S124: the current center node is determined as the first node, and in a specific implementation process, the step that the current center node is kept in a center node state and returns to step S121 in a next determination period is further included.

In the specific implementation process, the ordinary node of which the energy value is higher than the energy value of the current center node for the duration exceeding the specified time length and which has the highest energy value is preferably selected in step S123.

The preset condition in step S120 may be selected and determined according to different areas and structures of different wireless SONs, not limited to the abovementioned manner.

In the specific implementation process, each node may be switched between an ordinary node state and the center node state; when a node is in the ordinary node state, it is an ordinary node; and when a node is in the center node state, it is a center node. Here, the ordinary node state and the center node state are both for the wireless SON at the same level.

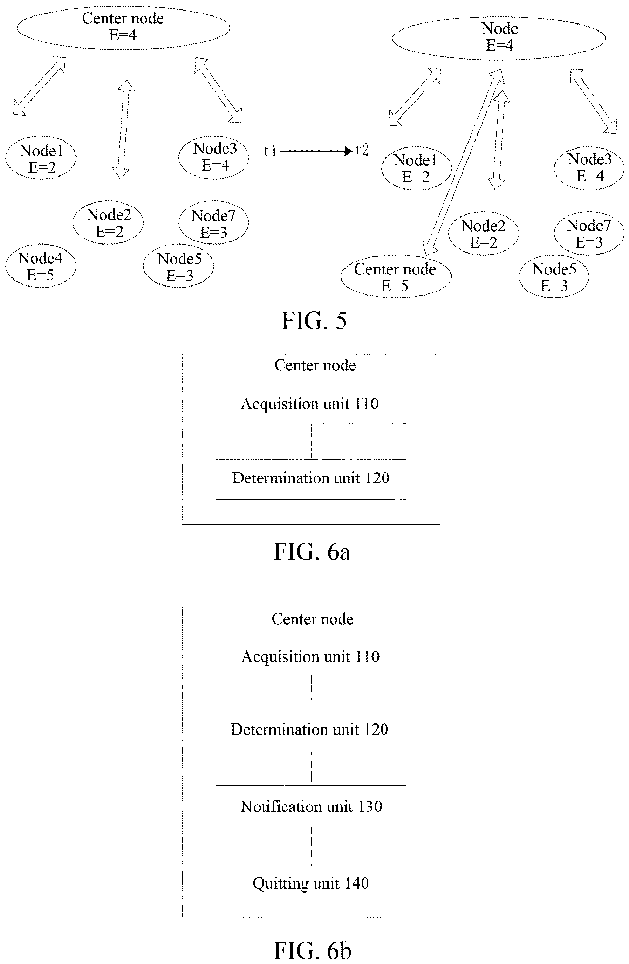

Specifically, as shown in FIG. 5, at a moment t1, the energy value of the center node is E=4; the energy value of the node 1 in the ordinary nodes managed by the center node is E=2, and the energy value of the node 2 is E=2; the energy value of the node 3 is E=4; the energy value of the node 7 is E=3; the energy value of the node 5 is E=3; and the energy value of the node 4 is E=5.

By comparison, it may be known that the energy value of the node 4 is higher than the energy value of the current center node, and if a duration when the energy value of the node 4 is higher than the energy value of the current center node is longer than the specified time length, the node 4 may be determined as the next center node. After the next center node is determined, the current center node sends a notification to the node 4 to switch the node 4 from the ordinary node state to the center node state, and the current center node quits the center node state. After quitting the center node state, the current center node is usually turned into the ordinary node state.

In FIG. 5, a moment t2 is later than the moment t1. From FIG. 5, it may be known that the center node at the moment t2 is the original node 4 and the original center node is switched into an ordinary node 8. At the moment t2, the ordinary node 8 receives management and/or control of the center node at the moment t2.

From the above, the embodiment provides a center node dynamic selection method, and provides a method for selecting the center node according to the energy values, and such a method of dynamically selecting the center node may ensure that the center node may provide stable and reliable management and/or control for the ordinary nodes to achieve adaptability to an increasingly complicated network condition.

Embodiment 3

As shown in FIG. 6a, the embodiment provides a center node, and the center node including an acquisition unit 110 and a determination unit 120.

The acquisition unit 110 is arranged to acquire an energy value of a current center node and energy values of each ordinary node; and

The determination unit 120 is arranged to determine a first node meeting a preset condition as a next center node according to the energy values.

Herein the energy values of the ordinary nodes are determined according to at least one or more of transmission powers, bandwidths, switching frequencies, mobile frequencies and electric quantity of the ordinary nodes; and

the energy value of the current center node is determined according to at least one or more of a transmission power, switching frequency, bandwidth, mobile frequency and electric quantity of the current center node.

Furthermore, as shown in FIG. 6b, the center node further includes a notification unit 130 and a quitting unit 140.

The notification unit 130 is arranged to, when the first node is an ordinary node, notify the first node to be switched to a center node state.

The quitting unit 140 is arranged to make the current center node quit the center node state.

In a specific implementation process, the center node further includes a keeping unit, and the keeping unit is arranged to, when the first node is the current center node, keep the center node in the center node state.

Or, when the first node is the current center node, the quitting unit 140 does not act, to keep the current center node in the center node state. The quitting unit 140 may further be a functional unit arranged to switch the node from the ordinary node state into the center node state or switch the center node state into the ordinary node state.

A specific structure of the acquisition unit 110 is different according to different manners for acquiring the energy values of the ordinary nodes, If receiving the energy values reported by the ordinary nodes, the acquisition unit 110 may be a communication interface, such as a structure like an antenna; and the communication interface is arranged to receive the energy values reported by the ordinary nodes or sent by other equipment which has known the energy values of the ordinary nodes.

A specific structure of the notification unit 130 includes a communication interface; and the communication interface may also be a sending antenna, and the antenna is arranged to send the notification and/or control information to the ordinary nodes.

Specific structures of the determination units 120 and the quitting unit 140 may include processors and storage media, executable instructions are stored in the storage media, and the processors read the executable instructions of the storage media through a structure such as a bus, and run the executable instructions to realize functions corresponding to each unit.

The processors may be electronic components with a processing function such as application processors, micro processing units, central processing units, programmable logic arrays or digital signal processors.

The center node may be any electronic device with a communication function, such as a notebook, a tablet computer or an intelligent mobile phone, as long as its energy value may meet the preset condition.

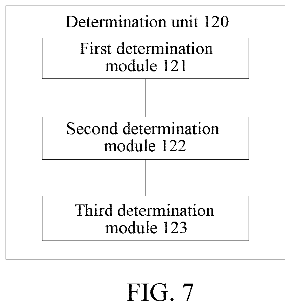

As shown in FIG. 7, the determination unit 120 includes a first determination module 121, a second determination module 122 and a third determination module 123.

The first determination module 121 is arranged to determine whether there is an energy value of at least one ordinary node is higher than the energy value of the current center node.

The second determination module 122 is arranged to, when the energy value of the at least one ordinary node is higher than the energy value of the current center node, determine whether there is an energy value of the at least one ordinary node with a duration when the energy value of the at least one ordinary node is higher than the energy value of the current center node exceeds a specified time length.

The third determination module 123, is arranged to, when there is the energy value of the at least one ordinary node is higher than the energy value of the current center node and the duration exceeds the specified time length, determine one ordinary node in the at least one ordinary node as the first node, otherwise determine the current center node as the first node.

The first determination module 121, the second determination module 122 and the third determination module 123 may correspond to the same or different processors; and when any two or more than two modules correspond to the same processor, the processor may adopt time-sharing processing or concurrent threads to realize functions of different modules.

Furthermore, the acquisition unit 110 is arranged to periodically detect the energy values of each ordinary node; or receive the energy values periodically reported by each ordinary node.

A specific structure of the acquisition unit 110 may include a timer and a detection element connected with the timer. The timer may be arranged to time each period. The detection element may include a signal detection part and a calculator which calculates the energy values according to a signal.

In addition, the acquisition unit 110 is further arranged to receive an energy value, actively reported by a newly added ordinary node, of the newly added ordinary node is received.

The center node of the embodiment provides a specific hardware support for the method of embodiment 1, may be arranged to implement any technical solution in embodiment 1, and also has the characteristic of enabling the wireless SON to meet a current increasingly complicated network structure.

A specific application example will be provided below with reference to embodiment 1 to embodiment 3.

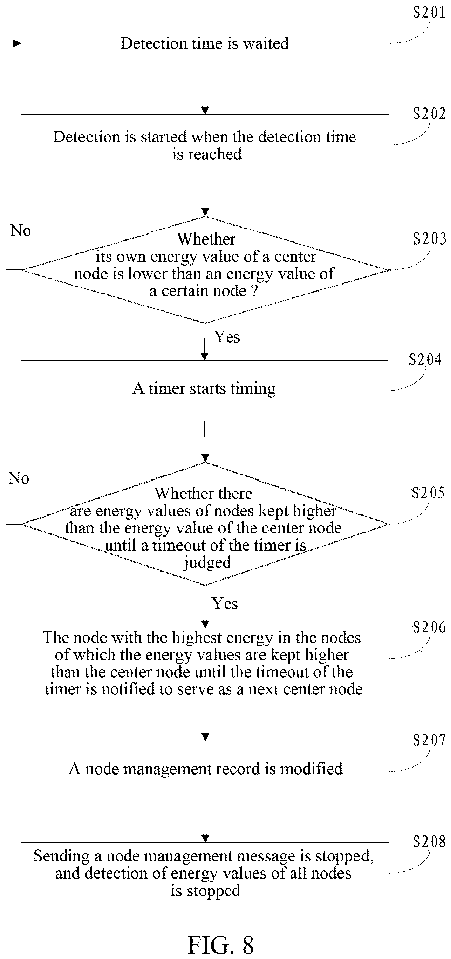

As shown in FIG. 8, a center node dynamic selection method of the example includes the following steps.

A current center node may regularly or periodically detect energy values of all nodes. Step S201 is that detection time is waited. Here, all the nodes include itself and ordinary nodes managed by it.

In step S202: detection is started when the detection time is reached.

In step S203: whether its own energy value of the current center node is lower than the energy value of a certain node is judged, if YES, step S204 is executed, and if NO, step S201 is executed.

In step S204: a timer starts timing.

In step S205: whether there is energy values of certain nodes are kept higher than the energy value of the current center node until a timeout of the timer is judged, step S206 is executed if YES, and if NO, step S201 is executed.

In step S206: the node with the highest energy in the nodes of which the energy values are kept higher than the center node until the timeout of the timer is notified to serve as a center node.

In step S207: the current center node modifies a node management record, for example, modifying itself into an ordinary node and recording a next center node.

In step S208: the current center node stops sending a node management message, and stops detecting the energy values of all the nodes.

The embodiment of the present invention further records a computer storage medium, a computer-executable instruction is stored in the computer storage medium, and the computer-executable instruction is arranged to execute at least one of the method of the embodiment of the present invention, specifically such as the method shown in FIG. 3a, FIG. 3b and/or FIG. 8.

The computer storage medium may be various media capable of storing program codes such as mobile storage equipment, a Read-Only Memory (ROM), a Random Access Memory (RAM), a magnetic disk or an optical disk, and is preferably a non-transitory storage medium.

The above is only the exemplary embodiment of the present invention and not intended to limit the scope of protection of the prevent invention. Any modifications made according to the principle of the present invention shall be understood to fall within the scope of protection of the present invention.

**Claims**

1.   A wireless Self-Organized Network SON, a structure of the wireless SON comprising a center node and ordinary nodes, wherein
     the center node and the ordinary nodes are non-peer nodes; and the center node is arranged to manage at least part of communication of the ordinary nodes.

2.   The wireless SON according to claim 1, wherein the center node is arranged to determine a next center node according to energy values of various ordinary nodes and an energy value of the center node, wherein the energy values of the ordinary nodes are determined according to at least one or more of transmission powers, switching frequencies, bandwidths, mobile frequencies and electric quantity of the ordinary nodes; and the energy value of the center node is determined according to at least one or more of a transmission power, a switching frequency, a bandwidth, a mobile frequency and electric quantity of the center node.

3.   The wireless SON according to claim 2, wherein the center node is further arranged to send a node replacement notification to the next center node; and the node replacement notification is arranged to trigger the next center node to be switched into a center node.

4.   The wireless SON according to claim 1, 2 or 3, wherein
     the center node is further arranged to send broadcast information to the ordinary nodes.

5.   A center node dynamic selection method, comprising:

     acquiring an energy value of a current center node and energy values of various ordinary nodes; and
     determining a first node that meets a preset condition as a next center node according to the energy value of the current center node and the energy values of the various ordinary nodes, the first node being an ordinary node or the current center node,
     wherein the energy values of the ordinary nodes are determined according to at least one or more of transmission powers, bandwidths, switching frequencies, mobile frequencies and electric quantity of the ordinary nodes; and
     the energy value of the current center node is determined according to at least one or more of a transmission power, a switching frequency, a bandwidth, a mobile frequency and electric quantity of the current center node.

6.   The method according to claim 5, wherein when the first node is the ordinary node, the method further comprises:

     notifying the first node to be switched to a center node state; and
     the current center node quitting the center node state.

7.   The method according to claim 5 or 6, wherein determining the first node that meets the preset condition as the next center node according to the energy value of the current center node and the energy values of the various ordinary nodes comprises:

     determining whether there is an energy value of at least one ordinary node is higher than the energy value of the current center node;
     when there is the energy value of the at least one ordinary node is higher than the energy value of the current center node, determining whether there is an energy value of the at least one ordinary node with a duration when the energy value of the at least one ordinary node is higher than the energy value of the current center node exceeds a specified time length; and when the energy value of the at least one ordinary node is higher than the energy value of the current center node and the duration exceeds the specified time length, determining one ordinary node in the at least one ordinary node as the first node, otherwise determining the current center node as the first node.

8.  The method according to claim 5 or 6, wherein acquiring the energy value of the current center node and the energy values of various ordinary nodes comprises:

    regularly or periodically detecting, by the current center node, the energy value of the current center node and the energy values of the various ordinary nodes;
    or
    regularly or periodically detecting the energy value of the current center node, and receiving the energy values regularly or periodically reported by the various ordinary nodes.

9.  The method according to claim 8, wherein acquiring the energy value of the current center node and the energy values of the various ordinary nodes further comprises:

    receiving an energy value, actively reported by a newly added ordinary node, of the newly added ordinary node.

10. A center node, the center node comprising:

    an acquisition unit, arranged to acquire an energy value of a current center node and energy values of various ordinary nodes; and
    a determination unit, arranged to determine a first node that meets a preset condition as a next center node according to the energy value of the current center node and the energy values of the various ordinary nodes, the first node being an ordinary node or the current center node, wherein the energy values of the ordinary nodes are determined according to at least one or more of transmission powers, bandwidths, switching frequencies, mobile frequencies and electric quantity of the ordinary nodes; and the energy value of the current center node is determined according to at least one or more of a transmission power, a switching frequency, a bandwidth, a mobile frequency and electric quantity of the current center node.

11. The center node according to claim 10, wherein the center node further comprises:

    a notification unit, arranged to, when the first node is an ordinary node, notify the first node to be switched to a center node state; and
    a quitting unit, arranged to make the current center node quit the center node state.

12. The center node according to claim 10 or 11, wherein the determination unit comprises:

    a first determination module, arranged to determine whether there is an energy value of at least one ordinary node is higher than the energy value of the current center node;
    a second determination module, arranged to, when there is the energy value of the at least one ordinary node is higher than the energy value of the current center node, determine whether there is an energy value of the at least one ordinary node with a duration when the energy value of the at least one ordinary node is higher than the energy value of the current center node exceeds a specified time length; and
    a third determination module, arranged to, when there is the energy value of the at least one ordinary node is higher than the energy value of the current center node and the duration exceeds the specified time length, determine one ordinary node in the at least one ordinary node as the first node, otherwise determine the current center node as the first node.

13. The center node according to claim 10 or 11, wherein the acquisition unit is arranged to regularly or periodically detect, by the current center node, the energy value of the current center node and the energy values of the various ordinary nodes; or regularly or periodically detect the energy value of the current center node and receive the energy values regularly or periodically reported by various ordinary nodes.

14. The center node according to claim 13, wherein the acquisition unit is further arranged to receive an energy value, actively reported by a newly added ordinary node, of the newly added ordinary node.

15. A computer storage medium, storing a computer-executable instruction, wherein the computer-executable instruction is arranged to execute at least one of the method according to claims 5-9.

FIG. 1

FIG. 2

FIG. 3a

Energy values of various ordinary nodes are acquired — S110

A first node meeting a preset condition is determined as a next center node according to an energy value of a current center node and the energy values of various ordinary nodes — S120

When the first node is an ordinary node, the first node is notified to be switched to a center node state — S130

The current center node quits the center node state — S140

FIG. 3b

Whether an energy value of at least one ordinary node is higher than an energy value of a current center node is determined — S121

NO

YES

Whether a duration when the energy value of the at least one ordinary node is higher than the energy value of the current center node exceeds a specified time length is determined — S122

NO

YES

One ordinary node in the at least one ordinary node is determined as a first node — S123

The current center node is determined as the first node — S124

FIG. 4

FIG. 5

FIG. 6a

FIG. 6b

FIG. 7

```
┌─────────────────────────────────────────────┐
│         Detection time is waited              │  S201
└─────────────────────────────────────────────┘
                      │
                      ▼
┌─────────────────────────────────────────────┐
│    Detection is started when the detection    │  S202
│            time is reached                    │
└─────────────────────────────────────────────┘
                      │
                      ▼
        ◇ Whether its own energy value ◇
No      ◇ of a center node is lower than ◇       S203
        ◇ an energy value of a certain  ◇
        ◇          node ?               ◇
                      │ Yes
                      ▼
┌─────────────────────────────────────────────┐
│            A timer starts timing              │  S204
└─────────────────────────────────────────────┘
                      │
                      ▼
        ◇ Whether there are energy      ◇
No      ◇ values of nodes kept higher    ◇       S205
        ◇ than the energy value of the   ◇
        ◇ center node until a timeout of ◇
        ◇ the timer is judged            ◇
                      │ Yes
                      ▼
┌─────────────────────────────────────────────┐
│  The node with the highest energy in the      │  S206
│  nodes of which the energy values are kept    │
│  higher than the center node until the        │
│  timeout of the timer is notified to serve    │
│  as a next center node                        │
└─────────────────────────────────────────────┘
                      │
                      ▼
┌─────────────────────────────────────────────┐
│     A node management record is modified      │  S207
└─────────────────────────────────────────────┘
                      │
                      ▼
┌─────────────────────────────────────────────┐
│  Sending a node management message is         │  S208
│  stopped, and detection of energy values      │
│  of all nodes is stopped                      │
└─────────────────────────────────────────────┘
```

FIG. 8

| | International application No. |
|---|---|
| **INTERNATIONAL SEARCH REPORT** | PCT/CN2014/087571 |

**A. CLASSIFICATION OF SUBJECT MATTER**

H04W 84/18 (2009.01) i

According to International Patent Classification (IPC) or to both national classification and IPC

**B. FIELDS SEARCHED**

Minimum documentation searched (classification system followed by classification symbols)

H04B; H04L; H04W; H04Q

Documentation searched other than minimum documentation to the extent that such documents are included in the fields searched

Electronic data base consulted during the international search (name of data base and, where practicable, search terms used)

WPI; EPODOC; CNKI; IEEE; CNPAT: ad w hoc, center, MANET, Self 2w organiz+, SON, non, peer-to-peer, dynamic+, select+, determin+, broadcast+, energy, inform+, condition

**C. DOCUMENTS CONSIDERED TO BE RELEVANT**

| Category* | Citation of document, with indication, where appropriate, of the relevant passages | Relevant to claim No. |
|---|---|---|
| X | CN 101036345 A (PHILIPS INTELLECTUAL) 12 September 2007 (12.09.2007) description, page 3, line 1 to page 6, line 3 from the bottom | 1 |
| Y | CN 101036345 A (PHILIPS INTELLECTUAL) 12 September 2007 (12.09.2007) description, page 3, line 1 to page 6, line 3 from the bottom | 4 |
| A | CN 101036345 A (PHILIPS INTELLECTUAL) 12 September 2007 (12.09.2007) description, page 3, line 1 to page 6, line 3 from the bottom | 2-3, 5-15 |
| Y | CN 101197748 A (SOUTH CHINA TECH UNIVESITY) 11 June 2008 (11.06.2008) description, page 4, line 11 to page 5, line 4 | 4 |
| A | CN 101197748 A (SOUTH CHINA TECH UNIVESITY) 11 June 2008 (11.06.2008) description, page 4, line 11 to page 5, line 4 | 1-3, 5-15 |

☒ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 30 March 2015 | 14 April 2015 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer ZHONG, Maojian Telephone No. (86-10) 62413360 |
|---|---|

Form PCT/ISA /210 (second sheet) (July 2009)

**INTERNATIONAL SEARCH REPORT**

| International application No. |
| --- |
| PCT/CN2014/087571 |

C (Continuation).     DOCUMENTS CONSIDERED TO BE RELEVANT

| Category* | Citation of document, with indication, where appropriate, of the relevant passages | Relevant to claim No. |
| --- | --- | --- |
| A | CN 1677924 A (LANGKE SCIENCE TECHNOLOGY CO., LTD.) 5 October 2005 (05.10.2005) the whole document | 1-15 |
| A | CN 102711209 A (HKUST FOK YING TUNG RES INST) 3 October 2012 (03.10.2012) the whole document | 1-15 |
| A | CN 102377801 A (INST COMPUTING TECH CN ACADEMY) 14 March 2012 (14.03.2012) the whole document | 1-15 |

Form PCT/ISA /210 (continuation of second sheet) (July 2009)

<div align="center">

**INTERNATIONAL SEARCH REPORT**

</div>

| International application No. |
| --- |
| PCT/CN2014/087571 |

---

**Box No. II    Observations where certain claims were found unsearchable (Continuation of item 2 of first sheet)**

This international search report has not been established in respect of certain claims under Article 17(2)(a) for the following reasons:

1. ☐   Claims Nos.:
    because they relate to subject matter not required to be searched by this Authority, namely:

2. ☐   Claims Nos.:
    because they relate to parts of the international application that do not comply with the prescribed requirements to such an extent that no meaningful international search can be carried out, specifically:

3. ☐   Claims Nos.:
    because they are dependent claims and are not drafted in accordance with the second and third sentences of Rule 6.4(a).

---

**Box No. III    Observations where unity of invention is lacking (Continuation of item 3 of first sheet)**

This International Searching Authority found multiple inventions in this international application, as follows:

[1] The same or corresponding technical features involved in claim 1 and claims 5, 10, 15 are: the network includes core node and ordinary node, however, D1 reveals the network including core node and ordinary node. Therefore, claim 1 and claims 5, 10, 15, do not share a same or corresponding technical feature, there is not technical correlations, and do not belong to a single general inventive concept. The invention does not meet the requirements of unity, and does not meet the requirement of PCT Rule 13. 1.

1. ☐   As all required additional search fees were timely paid by the applicant, this international search report covers all searchable claims.

2. ☒   As all searchable claims could be searched without effort justifying additional fees, this Authority did not invite payment of additional fees.

3. ☐   As only some of the required additional search fees were timely paid by the applicant, this international search report covers only those claims for which fees were paid, specifically claims Nos.:

4. ☐   No required additional search fees were timely paid by the applicant. Consequently, this international search report is restricted to the invention first mentioned in the claims; it is covered by claims Nos.:

**Remark on protest**          ☐   The additional search fees were accompanied by the applicant's protest and, where applicable, the payment of a protest fee.

☐   The additional search fees were accompanied by the applicant's protest but the applicable protest fee was not paid within the time limit specified in the invitation.

☐   No protest accompanied the payment of additional search fees.

---

Form PCT/ISA /210 (continuation of first sheet (2)) (July 2009)

**INTERNATIONAL SEARCH REPORT**
Information on patent family members

| International application No. |
| --- |
| PCT/CN2014/087571 |

| Patent Documents referred in the Report | Publication Date | Patent Family | Publication Date |
| --- | --- | --- | --- |
| CN 101036345 A | 12 September 2007 | JP 2008515317 A | 8 May 2008 |
| | | US 2009248829 A1 | 1 October 2009 |
| | | WO 2006035367 A1 | 6 April 2006 |
| | | EP 1807978 A1 | 18 July 2007 |
| CN 101197748 A | 11 June 2008 | None | |
| CN 1677924 A | 5 October 2005 | None | |
| CN 102711209 A | 3 October 2012 | None | |
| CN 102377801 A | 14 March 2012 | None | |

Form PCT/ISA /210 (patent family annex) (July 2009)